Europäisches Patentamt

European Patent Office

Office européen des brevets

(11) Veröffentlichungsnummer: **0 374 865**
**A2**

## (12) EUROPÄISCHE PATENTANMELDUNG

(21) Anmeldenummer: 89123519.4

(22) Anmeldetag: 20.12.89

(51) Int. Cl.⁵· **G02F 1/1337, G02F 1/1343**

(30) Priorität: 22.12.88 DE 3843228

(43) Veröffentlichungstag der Anmeldung:
**27.06.90 Patentblatt 90/26**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Escher, Claus, Dr.**
**Amselweg 3**
**D-6109 Mühltal(DE)**
Erfinder: **Dübal, Hans-Rolf, Dr.**
**Heuhohlweg 6**
**D-6240 Königstein/Taunus(DE)**
Erfinder: **Murakami, Mikio,**
**New Town Blg. 202 8-1 Miname 2-chome**
**Kakegowa-shi Shizuoka-ken(JP)**
Erfinder: **Illian, Gerhard, Dr.**
**Farbenstrasse 62**
**D-6230 Frankfurt am Main 80(DE)**
Erfinder: **Ohlendorf, Dieter, Dr.**
**Am kühlen Grund 4**
**D-6237 Liederbach(DE)**

(54) **Ferroelektrisches Flüssigkristall-Schalt-und-Anzeige-Element mit verminderter optischer Hysterese.**

(57) Schalt- und Anzeigeelemente auf der Basis von ferroelektrischen Flüssigkristallen zeigen vielfach eine ausgeprägte optische Hysterese, die zum Auftreten sogenannter Geisterbilder führt. Diese Erscheinung kann deutlich vermindert oder sogar unterdrückt werden, wenn mindestens eine der beiden Elektroden in solchen Elementen in unmittelbarem Kontakt mit dem flüssigkristallinen Medium steht.

EP 0 374 865 A2

### Ferroelektrisches Flüssigkristall-Schalt- und Anzeige-Element mit verminderter optischer Hysterese

Schalt- und Anzeigeelemente, bei denen ferroelektrische Flüssigkristalle als Schalt- und Anzeigemedium dienen (FLC-Displays), sind beispielsweise in der US-PS 4,367,924 beschrieben. Sie enthalten eine Schicht aus einem ferroelektrischen flüssigkristallinen Medium (FLC), die beiderseitig von elektrisch isolierenden Schichten, Elektroden und Begrenzungsscheiben, üblicherweise Glasscheiben, eingeschlossen ist. Außerdem enthalten sie einen Polarisator, wenn sie im Guest-Host-Mode, und zwei Polarisatoren, wenn sie im Doppelbrechungs-Mode betrieben werden. Die elektrisch isolierenden Schichten sollen elektrische Kurzschlüsse zwischen den Elektroden und die Diffusion von Ionen aus dem Glas der Begrenzungsscheiben in den FLC verhindern. Ferner dient mindestens eine und vorzugsweise beide der isolierenden Schichten als Orientierungsschicht, die den FLC in eine Konfiguration bringt, bei der die Moleküle des FLC mit ihren Längsachsen parallel zueinander liegen, und in der die smektischen Ebenen senkrecht oder schräg zur Orientierungsschicht angeordnet sind. In dieser Anordnung gibt es für die FLC-Moleküle zwei mögliche und gleichwertige Orientierungen, in die sie durch pulsartiges Anlegen eines elektrisches Feldes gebracht werden können. Sie verharren jeweils in der zuletzt erzeugten Orientierung, auch wenn das Feld abgeschaltet oder das Display kurzgeschlossen wird. FLC-Displays sind also bistabil schaltbar. Die Schaltzeiten liegen im Bereich von µs und sind um so kürzer, je höher die spontane Polarisation des verwendeten FLC ist.

Gegenüber den bisher verwendeten Flüssigkristalldisplays, die alle nicht ferroelektrisch sind, haben FLC-Displays insbesondere den Vorzug, daß das erreichbare Multiplexverhältnis, d. h. die maximale Zahl der im zeitlich sequentiellen Verfahren ("Multiplex-Verfahren") ansteuerbaren Zeilen, sehr viel größer ist als bei den bekannten nicht ferroelektrischen Displays.

Ein gravierender Nachteil von FLC-Displays ergibt sich jedoch, wie sich herausgestellt hat, daraus, daß ein Display, das sich längere Zeit in einem der beiden stabilen Zustände befunden hat (stehendes Bild), nur sehr schwer, d. h. mit sehr hoher Amplitude oder sehr langer Pulsdauer der angelegten Spannung in den anderen Zustand umzuschalten ist, also eine ausgeprägte optische Hysterese zeigt. Bei bildhaften Anzeigen führt das dazu, daß ein längere Zeit eingeschriebenes Bild im Nachfolgebild schemenhaft als sog. Geisterbild zu erkennen ist. Diese Erscheinung der optischen Hysterese ist um so stärker ausgeprägt, je höher die spontane Polarisation von FLC ist. Da andererseits die Schaltzeit von FLC der spontanen Polarisation umgekehrt proportional ist, wird ein wichtiger Vorteil der FLC-Displays durch diese Hysterese wieder zunichte gemacht. Die Ursache dieses Phänomens ist bisher nicht eindeutig geklärt; es gibt Anzeichen dafür, daß ionische Verunreinigungen im FLC dafür verantwortlich sind.

Es wurde nun überraschend gefunden, daß die beschriebene Erscheinung der optischen Hysterese in FLC-Displays stark vermindert oder unterdrückt werden kann, wenn mindestens eine der Elektroden in unmittelbarem Kontakt mit dem flüssigkristallinen Medium steht.

Bevorzugt stehen beide Elektroden im unmittelbaren Kontakt mit dem flüssigkristallinen Medium.

Die im unmittelbaren Kontakt mit dem flüssigkristallinen Medium stehende Elektrode kann bei geeigneter Wahl des Elektrodenmaterials gleichzeitig die Orientierungsschicht sein.

Stehen beide Elektroden im unmittelbaren Kontakt mit dem flüssigkristallinen Medium, so können beide als Orientierungsschichten dienen.

Insbesondere bei großflächigen Displays kann es zur Vermeidung von Kurzschlüssen zweckmäßig sein, daß eine Elektrode in unmittelbarem Kontakt mit dem flüssigkristallinen Medium steht, während die anderen eine elektrisch isolierende Schicht trägt.

Die elektrisch isolierende Schicht kann eine Orientierungsschicht sein.

Die Verminderung der optischen Hysterese ist um so ausgeprägter, je höher die elektrische Leitfähigkeit der Elektroden ist. Ihre spezifische Leitfähigkeit soll daher in der Richtung senkrecht zu ihrer Ebene mindestens $10^{-5}$ Siemens • $m^{-1}$ und ihre Leitfähigkeit mindestens 100 Siemens • $m^{-2}$ betragen.

Als leitfähiges Elektrodenmaterial eignen sich Metalle, leitfähige Metalloxide, leitfähige Polymerisate oder Polymerisatgemische oder Polymerisate oder Polykondensate mit eingelagerten leitfähigen Partikeln.

Als besonders geeignet als Elektrodenmaterial hat sich Indiumzinnoxid erwiesen, das gleichzeitig als Orientierungsschicht dienen kann.

Wenn das Elektrodenmaterial nicht selbst als Orientierungsschicht geeignet ist, kann es auf einen als Orientierungsschicht geeigneten Träger aufgebracht werden, beispielsweise durch Aufdampfen oder Sputtern.

Vielfach sind elektrisch leitfähige organische Materialien als Orientierungsschicht gut geeignet, zeigen aber keine ausreichende laterale Leitfähigkeit.

Es kann daher zweckmäßig sein, mindestens eine der Elektroden zweischichtig aufzubauen, wobei die dem flüssigkristallinen Medium zugewandte Schicht als Orientierungsschicht dient und aus einem elektrisch leitfähigen organischen Material besteht, während die zweite Schicht aus einem Material mit höherer elektrischer Leitfähigkeit besteht.

Wie bekannt, muß natürlich bei der Auswahl der Materialien für das FLC-Display darauf geachtet werden, daß die Transparenz des Displays möglichst groß ist. Im Guest-Host-Mode kann jedoch die vom Betrachter aus hintere Elektrode auch voll reflektierend sein und beispielsweise aus einer Silberschicht bestehen.

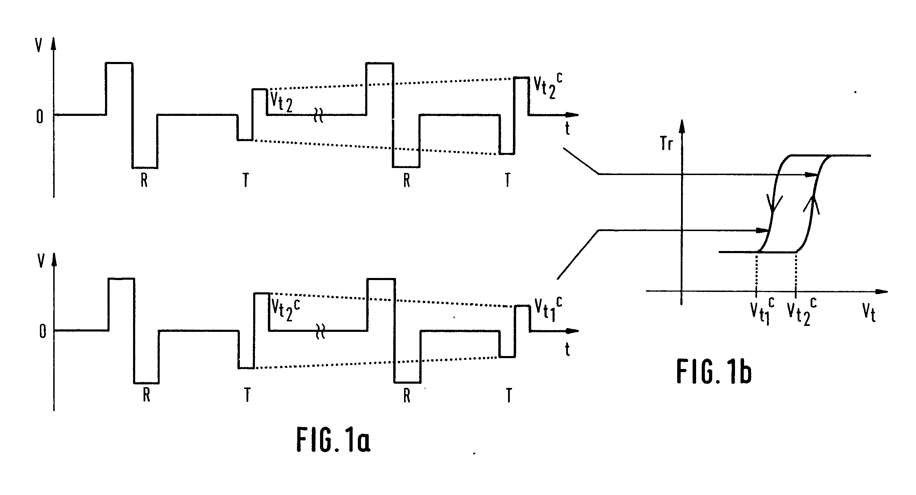

Das Phänomen der optischen Hysterese wird an Figur 1 erläutert.

Ein FLC-Display wird einer Folge von bipolaren Pulsen unterworfen (Fig. 1a), und zwar folgt jeweils auf einen "Reset-Puls" R, der so groß ist, daß das Display in jedem Fall schaltet, ein inverser Testpuls T. Ist der Testpuls groß genug, so schaltet das Display in umgekehrter Richtung wie beim Reset-Puls, was zu einer blinkenden Anzeige des Displays führt. Die Mindestspannung $V_t^c$ Fig. 1b), die zum Schalten durch den Testpuls nötig ist, ist dabei von der Vorgeschichte des Schaltens des Displays abhängig. Ist die Ausgangssituation so, daß die Testpulse zu klein zum Schalten sind, so daß eine statische Anzeige vorliegt, so führt die Erhöhung der Testpulsspannung $V_t$ erst bei relativ hohen Werten $V_{t2}^c$ (Fig. 1b) zu einer schaltenden, d. h. blinkenden, Anzeige (Fig. 1a, oben). Reduziert man ausgehend von $V_{t2}^c$ die Höhe des Testpulses (Fig. 1a unten), so schaltet das Display weiter (blinkende Anzeige), und erst bei Reduzierung der Höhe des Testpulses deutlich unterhalb $V_{t2}^c$ schaltet der Testpuls das Display nicht mehr ($V_t^{c_1}$), und die Anzeige wird wieder statisch. Diese "optische Hysterese" ist in Fig. 1b idealisiert dargestellt.

In hochinformativen Displays führt das Phänomen der optischen Hysterese dazu, daß bei Veränderung der Ansteuerspannung, die in der Praxis dem Testpuls des Experiments entspricht, einzelne Bildpunkte je nach ihrer Vorgeschichte schalten oder nicht schalten, wodurch sogenannte Geisterbilder auftreten.

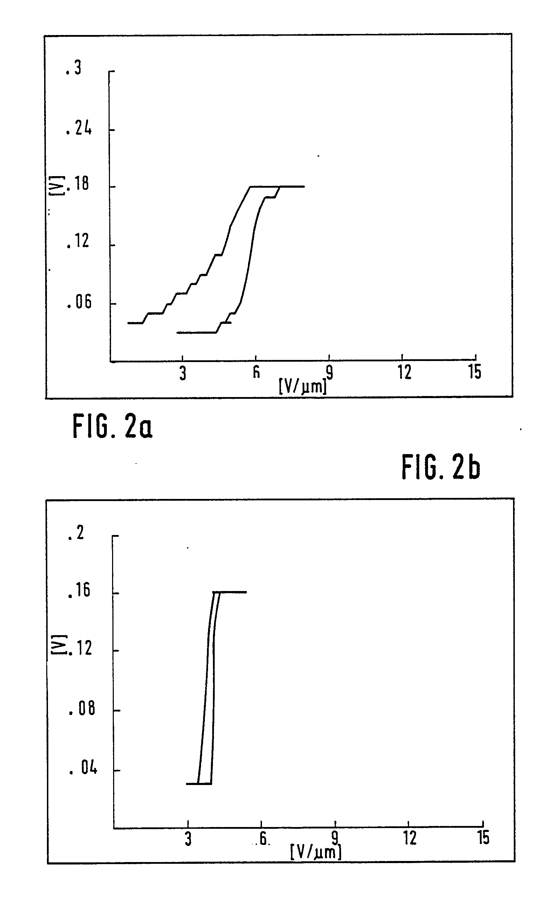

Fig. 2 zeigt im Vergleich die nach der oben erläuterten Methode gewonnene Hysteresekurve eines bekannten Displays, bei dem die Elektroden durch eine Orientierungsschicht gegen den FLC isoliert sind (Fig. 2a), und eines erfindungsgemäßen Displays, bei dem zwei Elektroden aus geriebenem Indiumzinnoxid, die gleichzeitig Orientierungsschichten sind, in unmittelbarem Kontakt mit dem FLC stehen (Fig. 2b). Die weitgehende Unterdrückung der Hysterese im letzteren Fall ist deutlich erkennbar.

Bekanntlich enthalten FLC-Displays eine Vielzahl von Elektroden und Gegenelektroden, die in Form von Längs- und Querstreifen vor und hinter der FLC-Schicht angeordnet sind. Der hier verwendete Ausdruck "Elektrode" bzw. "Elektroden" umfaßt auch die so strukturierte Anordnung.

## Ansprüche

1. Ferroelektrisches Flüssigkristall-Display, bestehend aus einer Schicht aus einem ferroelektrischen flüssigkristallinen Medium, zwei Elektroden, mindestens einer Orientierungsschicht für das flüssigkristalline medium, zwei äußeren Begrenzungsscheiben und mindestens einem Polarisator, dadurch gekennzeichnet, daß mindestens eine der Elektroden in unmittelbarem Kontakt mit dem flüssigkristallinen Medium steht.

2. Display nach Anspruch 1, dadurch gekennzeichnet, daß beide Elektroden in unmittelbarem Kontakt mit dem flüssigkristallinen Medium stehen.

3. Display nach Anspruch 1, dadurch gekennzeichnet, daß die in unmittelbarem Kontakt mit dem flüssigkristallinen Medium stehende Elektrode gleichzeitig eine Orientierungsschicht ist.

4. Display nach Anspruch 2, dadurch gekennzeichnet, daß mindestens eine der Elektroden eine Orientierungsschicht ist.

5. Display nach Anspruch 1, dadurch gekennzeichnet, daß eine der Elektroden in unmittelbarem Kontakt mit dem flüssigkristallinen Medium steht und die andere dagegen isoliert ist.

6. Display nach Anspruch 5, dadurch gekennzeichnet, daß als Isolation eine Orientierungsschicht dient.

7. Display nach einem der Ansprüche 1 - 5, dadurch gekennzeichnet, daß die Elektroden unabhängig voneinander aus einem Metall oder aus einem elektrisch leitfähigen Metalloxid, einem elektrisch leitfähigen Polymerisat oder Polymerisatgemisch oder einem Polymerisat oder Polykondensat mit eingelagerten elektrisch leitfähigen Partikeln bestehen.

8. Display nach Anspruch 7, dadurch gekennzeichnet, daß mindestens eine der Elektroden aus Indiumzinnoxid bestehen.

9. Display nach Anspruch 8, dadurch gekennzeichnet, daß mindestens eine der Elektroden aus geriebenem Indiumzinnoxid besteht.

10. Display nach Anspruch 3, dadurch gekennzeichnet, daß mindestens eine der Elektroden zweischichtig aufgebaut ist und aus einer dem flüssigkristallinen Medium zugewandten Orientierungsschicht aus einem elektrisch leitfähigen organischen Material und einer zweiten Schicht besteht, deren Leitfähigkeit höher ist als die der Orientierungsschicht.

FIG.1b

FIG.1a

FIG. 2a

FIG. 2b